# EUROPÄISCHE PATENTSCHRIFT

(11) **EP 3 724 436 B1**
(45) Veröffentlichungstag und Bekanntmachung des Hinweises auf die Patenterteilung: **27.10.2021**
(21) Anmeldenummer: 18795544.8
(22) Anmeldetag: 29.10.2018
(51) Int. Cl.: E05F 11/38

(54) **HALTEELEMENT FÜR EINE HEB- UND SENKBARE FAHRZEUG-SEITENSCHEIBE**
SUPPORT MEMBER FOR A RAISABLE AND LOWERABLE VEHICLE SIDE PANEL
ÉLÉMENT DE SUPPORT POUR UNE VITRE LATÉRALE DU VÉHICULE POUVANT ÊTRE SOULEVÉE ET ABAISSÉE

(30) Priorität: 12.12.2017 EP 17206582
(43) Veröffentlichungstag der Anmeldung: 21.10.2020
(73) Patentinhaber: SAINT-GOBAIN GLASS FRANCE, 92400 Courbevoie (FR)
(72) Erfinder: KLEYER, Dieter, 52146 Würselen (DE); OLTROGGE, Jan-Uwe, 52066 Aachen (DE)
(74) Vertreter: Gebauer, Dieter Edmund
(86) Internationale Anmeldenummer: PCT/EP2018/079561
(87) Internationale Veröffentlichungsnummer: WO 2019/115079

(56) Entgegenhaltungen:
- DE-A1- 3 320 157
- US-A- 4 762 904

## Beschreibung

Die Erfindung betrifft ein Halteelement für eine Seitenscheibe eines Fahrzeugs, eine damit ausgestattete Seitenscheibe sowie ein Verfahren zu deren Herstellung und deren Verwendung.

Kraftfahrzeuge verfügen typischerweise über zu öffnende Seitenfenster. Solche Seitenfenster sind mit einer Seitenscheibe versehen, welche sich durch im Wesentlichen vertikale Verschiebung bewegen (also heben und senken) lässt, wodurch das Seitenfenster geöffnet und geschlossen werden kann. Um das Fenster bewegen zu können, ist es mit einem Mechanismus im Inneren der Fahrzeugkarosserie verbunden.

Zur Anbindung der Seitenscheibe an den Mechanismus zum Heben und Senken kann die Seitenscheibe mit einem oder mehreren Löchern im Bereich ihrer Unterkante versehen sind. Alternativ kann auch ein oder mehrere Halteelemente im Bereich der Unterkante an der Seitenscheibe angebracht, insbesondere angeklebt sein. Solche Halteelemente weisen üblicherweise einen im Wesentlichen Y-förmigen Querschnitt auf mit zwei Anlageabschnitten, die an die beiden Oberflächen der Seitenscheibe angeklebt sind und an die sich über jeweils eine Stufe ein gemeinsamer Befestigungsabschnitt anschließt. Der Befestigungsabschnitt schließt sich an die Unterkante der Seitenscheibe an und ist mit einem Loch zur Verbindung mit dem Mechanismus zum Heben und Senken ausgestattet. Solche Y-förmigen Halteelemente sind beispielsweise aus EP1936088A1, EP1936087A1, EP1935557A1, EP1935558A1, EP1745190A1, EP1299611A2 und DE4340363A1 bekannt.

Typischerweise werden herkömmliche Y-förmige Halteelemente auf die Unterkante der Seitenscheibe aufgesteckt. Anschließend wird der Klebstoff aufgebracht, insbesondere durch Befüllöffnungen in den Anlageabschnitten eingespritzt. Um einen Austritt des Klebstoffs aus dem Zwischenraum zwischen Anlageabschnitt und Scheibenoberfläche zu verhindern, ist es dabei erforderlich, diesen Zwischenraum mit einer an die Seitenkanten der Anlageabschnitte anliegenden Dichtvorrichtung abzudichten. Alternativ kann ausgetretener Klebstoff in einem nachfolgenden Arbeitsschritt entfernt werden. Sowohl die Verwendung des Dichtelements als auch die nachträgliche Entfernung ausgetretenen Klebstoffs gestalten das Anbringen des Halteelements aufwändig.

US4762904 offenbart ein Halteelement, dessen Anlageflächen mit jeweils einem Kanal ausgestattet sind, zur seitlichen Einspritzung des Klebstoffs. DE3320157A1 offenbart ein Halteelement, dessen Anlagefläche mit Vertiefungen, Einschnitten oder Durchbrechungen ausgebildet ist, um die Kontaktfläche für den Klebstoff zu erhöhen.

Der vorliegenden Erfindung liegt die Aufgabe zugrunde, ein verbessertes Halteelement bereitzustellen, welches auch ohne Verwendung einer Dichtvorrichtung an einer Seitenscheibe angebracht werden kann, wobei der Austritt von Klebstoff aus dem Zwischenraum zwischen Halteelement und Scheibenoberfläche verhindert oder zumindest verringert wird.

Die Aufgabe der vorliegenden Erfindung wird erfindungsgemäß durch ein Halteelement gemäß Anspruch 1 gelöst. Bevorzugte Ausführungen gehen aus den Unteransprüchen hervor.

Das erfindungsgemäße Halteelement für eine Seitenscheibe eines Fahrzeugs umfasst mindestens einen Anlageabschnitt und einen damit verbundenen, insbesondere starr verbundenen Befestigungsabschnitt. Der Anlageabschnitt ist dafür vorgesehen und geeignet, an einer ersten Oberfläche der Seitenscheibe befestigt zu werden. Der Anlageabschnitt weist eine Anlagefläche auf, welche bestimmungsgemäß dafür vorgesehen ist, der ersten Oberfläche der Seitenscheibe zugewandt zu werden beziehungsweise auf diese gerichtet zu werden und über einen Klebstoff mit dieser ersten Oberfläche verbunden zu werden. Der Befestigungsabschnitt ragt bestimmungsgemäß über die Unterkante der Seitenscheibe über und ist zur Befestigung am Fahrzeug vorgesehen und geeignet. Dazu wird der Befestigungsabschnitt mit einem Mechanismus zum Heben und Senken der Seitenscheibe innerhalb der Fahrzeugkarosserie verbunden.

Die Anlagefläche des Anlageabschnitts weist erfindungsgemäß Kanäle auf. Unter einem Kanal wird im Sinne der Erfindung eine langgestreckte Vertiefung bezeichnet, die in der Anlagefläche eingebracht ist, welche ansonsten eine plane oder gekrümmte Fläche aufspannt, insbesondere plan ist. Die Kanäle sind erfindungsgemäß dafür vorgesehen, das Fließverhalten, insbesondere die Fließrichtung, eines in den Zwischenraum zwischen Anlageabschnitt und Seitenscheibe eingespritzten Klebstoffs zu beeinflussen und können daher auch als Fließkanäle bezeichnet werden. Die Kanäle sollen insbesondere die Verteilung des Klebstoffs über die Anlagefläche verbessern. Um eine hinreichende Benetzung der Anlagefläche und des ihr gegenüberliegenden Teils der Scheibenoberfläche zu gewährleisten, muss bei herkömmlichen Halteelementen entweder der Zwischenraum zwischen Anlagefläche und Scheibenoberfläche abgedichtet werden oder ein erheblicher Austritt an Klebstoff aus dem Zwischenraum in Kauf genommen werden, der nachträglich entfernt werden muss. Die erfindungsgemäße Gestaltung der Anlagefläche mit Fließkanälen bewirkt eine verbesserte Verteilung des Klebstoffs über die Anlagefläche, so dass deren hinreichende Benetzung erreicht wird ohne Austritt von Klebstoff oder zumindest mit stark reduziertem Austritt von Klebstoff. So kann auf das Abdichten des Zwischenraums zwischen Anlageabschnitt und Seitenscheibe oder auf eine Nachbearbeitung zur Entfernung überschüssigen Klebstoffs verzichtet werden, was das Herstellungsverfahren entscheidend vereinfacht und beschleunigt. Das ist der Vorteile der vorliegenden Erfindung.

Typischerweise ist der mindestens eine Anlageabschnitt über einen Stufenabschnitt mit dem Befestigungsabschnitt verbunden. Der Stufenabschnitt bewirkt, dass der Befestigungsabschnitt gegenüber dem Anlageabschnitt versetzt ist, insbesondere in die Richtung in welche die Anlagefläche weist. Um den Versatz zu erzeugen, betragen der Winkel zwischen dem Stufenabschnitt und dem Anlageabschnitt sowie der Winkel zwischen dem Stufenabschnitt und dem Befestigungsabschnitt größer 0° und kleiner 180°, typischerweise größer oder gleich 45° und kleiner 180°. Der laterale Versatz zwischen Anlageabschnitt und Befestigungsabschnitt ermöglicht, dass der über die Unterkante der Seitenscheibe hinausragende Befestigungsabschnitt in Einbaulage in der Ebene der Seitenscheibe angeordnet ist. Anders ausgedrückt ist der Befestigungsabschnitt auf die Unterkante der Seitenscheibe gerichtet. Das ist hinsichtlich der Lage des Gewichtsschwerpunkts und des Platzbedarfs in der Fahrzeugkarosserie vorteilhaft.

Das Halteelement weist mindestens eine Befüllöffnung auf. Damit ist eine Durchführung durch das Halteelement gemeint, die dazu vorgesehen und geeignet ist, Klebstoff von der von der Seitenscheibe abgewandten Seite des Halteelements durch das Halteelement hindurch in den Zwischenraum zwischen Anlageabschnitt und Scheibenoberfläche einzuspritzen. Solche Befüllöffnungen sind auch bei herkömmlichen Halteelementen üblich. Der Flächeninhalt der Befüllöffnung beträgt typischerweise von 0,5 mm² bis 25 mm², bevorzugt von 2 mm² bis 12 mm². Die Kanäle sind derart in der Anlagefläche angeordnet, dass sich ein durch die Befüllöffnung in den Zwischenraum eingespritzter Klebstoff gleichmäßiger über die Anlagefläche verteilt verglichen mit einem Halteelement mit herkömmlicher Anlagefläche ohne Kanal. Insbesondere sollten mindestens 95% der Anlagefläche und des ihr gegenüberliegenden Bereichs der Scheibenoberfläche mit Klebstoff benetzt werden, bevor der Klebstoff beginnt, aus dem Zwischenraum auszutreten beziehungsweise über die Anlagefläche überzutreten. Die genaue Anordnung der Kanäle ist dazu auf vielfältige Weise realisierbar.

Die Befüllöffnung kann im Anlageabschnitt oder im Stufenabschnitt ausgebildet sein, oder auch die Grenze zwischen beiden Bereichen überspannen.

Der Fachmann kann die geometrische Anordnung der Kanäle in Abhängigkeit von den Erfordernissen im Einzelfall geeignet wählen, um das erfindungsgemäße Ziel einer möglichst homogenen Verteilung des Klebstoffs über die Anlagefläche zu erreichen. Die Kanäle sind auf die Befüllöffnung gerichtet, so dass der Klebstoff ausgehend von der Befüllöffnung über die Anlagefläche verteilt wird. Anders ausgedrückt weisen die Kanäle auf die Befüllöffnung. Die Kanäle können sich bis zur Befüllöffnung erstrecken; alternativ können die der Befüllöffnung zugewandten Kanalenden einen Abstand zur Befüllöffnung aufweisen. Prinzipiell kann auch ein einziger Kanal ausreichend sein, der beispielsweise schneckenhausartig um die Befüllöffnung verläuft.

Die Anlagefläche weist eine Mehrzahl von Kanälen auf. Die Kanäle sind dabei auf die Befüllöffnung gerichtet und fächerartig über die Anlagefläche oder einen Bereich der Anlagefläche verteilt. Das bedeutet, dass sich die einzelnen Kanäle radial zwischen der Befüllöffnung und den Seitenkanten der Anlagefläche erstrecken. Anders ausgedrückt gehen die Kanäle gleichsam strahlenartig von der Befüllöffnung aus, so dass der Abstand benachbarter Kanäle mit wachsendem Abstand zur Befüllöffnung ansteigt. Die Kanäle können bis zu den Seitenkanälen verlaufen oder vorher enden. Bevorzugt verlaufen die Kanäle nicht bis zu den Seitenkanten, sondern enden vorher, so dass ein Austritt von Klebstoff über die Anlagefläche hinaus weniger befördert wird. Der Abstand der Kanalenden zur Seitenkante der Anlagefläche beträgt bevorzugt von 2 mm bis 15 mm, besonders bevorzugt von 3 mm bis 8 mm. Die Kanäle können sich bis zur Befüllöffnung erstrecken oder einen Abstand zur Befüllöffnung aufweisen, wobei ersteres bevorzugt ist.

Die Anlagefläche weist typischerweise eine polygonale, insbesondere rechteckige Form auf. In einer vorteilhaften Ausgestaltung ist mindestens einer Ecke der Anlagefläche ein Kanal zugeordnet, der auf sie gerichtet ist. Bevorzugt ist der oder den Ecken der Anlagefläche, die am weitesten von der Befüllöffnung entfernt sind, jeweils ein Kanal zugeordnet, der auf sie gerichtet ist. Da die Befüllöffnung typischerweise in der Nähe der zum Befestigungsabschnitt hingewandten Kante der Befüllöffnung angeordnet ist, sind die besagten Ecken typischerweise die vom Befestigungsabschnitt abgewandten Ecken der Anlagefläche. Der Klebstoff wird dann vorteilhaft in den Bereich dieser weit von der Befüllöffnung entfernten Ecken befördert, was die Homogenität der Klebstoffverteilung entscheidend verbessert.

Die Breite und Tiefe der Kanäle kann vom Fachmann nach den Erfordernissen im Einzelfall geeignet gewählt werden. Die geeignete Breite und Tiefe hängt insbesondere von der Viskosität des Klebstoffs ab, wobei eine höhere Viskosität breitere und tiefere Kanäle erforderlich macht. Die Breite der Kanäle beträgt typischerweise von 0,5 mm bis 3 mm, bevorzugt von 1 mm bis 2 mm. Die Tiefe der Kanäle beträgt typischerweise von 0,5 mm bis 2 mm, bevorzugt von 1 mm bis 1,5 mm. Mit diesen Werten werden gute Ergebnisse erreicht, insbesondere bei Verwendung eines gebräuchlichen Klebstoffs mit einer Viskosität von 1 Pa×s bis 150 Pa×s. Die Breite und/oder die Tiefe eines einzelnen Kanals können auch veränderlich sein. So kann es beispielsweise vorteilhaft sein, dass sich die Breite und/oder die Tiefe des Kanals mit wachsendem Abstand zur Befüllöffnung verringern, um der geringeren zu transportierenden Menge an Klebstoff in den äußeren Bereichen der Anlagefläche Rechnung zu tragen.

Der Befestigungsabschnitt weist typischerweise eine Durchführung (Montageloch) auf, die zur Befestigung am Fahrzeug vorgesehen und geeignet ist. Die Durchführung ist zur Befestigung des Halteelements am Fahrzeug, insbesondere am Mechanismus zum Heben und Senken der Seitenscheibe vorgesehen. Die Durchführung ist üblicherweise im Wesentlichen kreisrund, worauf die meisten herkömmlichen Befestigungssysteme ausgelegt sind. Die Durchführung kann aber je nach den Erfordernissen im Einzelfall auch jede beliebige andere Form aufweisen, beispielsweise eine elliptische Form oder auch eine unregelmäßige Form. Die Größe der Durchführung beträgt üblicherweise mindestens 20 mm², insbesondere von 20 mm² bis 2000 mm², bevorzugt von 80 mm² bis 700 mm². Die Durchführung ist idealerweise etwa kreisrund mit einem Durchmesser von 5 mm bis 50 mm, bevorzugt von 10 mm bis 30 mm.

In einer Ausgestaltung der Erfindung ist das Halteelement ein einseitig an der Seitenscheibe zu befestigendes Halteelement. Ein solches Halteelement ist dafür vorgesehen, nur mit einer einzigen Oberfläche der Seitenscheibe verbunden zu werden. Dazu weist das Halteelement typischerweise genau einen einzigen Anlageabschnitt auf, der mit dem Befestigungsabschnitt starr verbunden ist, bevorzugt über einen Stufenabschnitt.

In einer weiteren Ausgestaltung der Erfindung ist das Halteelement ein beidseitig an der Seitenscheibe zu befestigendes Halteelement. Ein solches Halteelement ist dafür vorgesehen, mit den beiden gegenüberliegenden Oberflächen der Seitenscheibe verbunden zu werden. Dazu weist das Halteelement einen ersten Anlageabschnitt und einen zweiten Anlageabschnitt auf, die mit dem gemeinsamen Befestigungsabschnitt starr verbunden sind. Der erste Anlageabschnitt ist dafür vorgesehen, an der ersten Oberfläche der Seitenscheibe befestigt zu werden. Der zweite Anlageabschnitt ist dafür vorgesehen, an der zweiten Oberfläche der Seitenscheibe befestigt zu werden, welche der ersten Oberfläche gegenüberliegt. Die beiden Anlageabschnitte sind einander gegenüberliegend angeordnet, so dass ihre jeweiligen Anlageflächen einander zugewandt sind. Das Halteelement weist einen um Wesentlichen Y-artigen Querschnitt auf. Die Anlageflächen beider Anlageabschnitte sind bevorzugt mit den erfindungsgemäßen Kanälen ausgebildet und weisen besonders bevorzugt jeweils eine Befüllöffnung auf, auf welche die Kanäle gerichtet sind.

Beim beidseitig zu befestigenden Halteelement ist bevorzugt der erste Anlageabschnitt über einen ersten Stufenabschnitt und der zweite Anlageabschnitt über einen zweiten Stufenabschnitt mit dem gemeinsamen Befestigungsabschnitt starr verbunden. Besonders bevorzugt weisen die beiden Stufenabschnitte die gleiche Geometrie auf, insbesondere Länge und Winkel zu den angrenzenden Abschnitten. Das hat den Vorteil, dass in Einbaulage der Befestigungsabschnitt mittig zwischen den Anlageabschnitten und in der Ebene der Seitenscheibe angeordnet ist, was hinsichtlich der Lage des Gewichtsschwerpunkts und des Platzbedarfs in der Fahrzeugkarosserie vorteilhaft ist.

Das Halteelement ist bevorzugt aus einem Metall, einer Metalllegierung oder einem Kunststoff gefertigt, besonders bevorzugt aus Aluminium, Stahl, Edelstahl oder thermoplastischen Kunststoffen mit oder ohne Glasfaser-, Glaskugel- oder ähnlichen Verstärkungen sowie ihre Blends mit weiteren Kunststoffen. Geeignete thermoplastische Kunststoffe sind beispielsweise Polyamide (PA), Polybutylenterephthalaten (PBT) oder Polyethylenterephthalat (PET). Das Halteelement ist ganz besonders bevorzugt aus Aluminium, PET oder Polyamid 66 gefertigt. Geeignete Materialien sind beispielsweise unter den Halndelsnamen Technyl, Zytel, Ultramid, Schulamid, Ultradur, Arnite, Duranex, Crastin, Bergadur, Pocan oder Grivor erhältlich. Auch Kombinationen der genannten Materialien sind denkbar. Bevorzugt ist das gesamte Halteelement aber einstückig ausgebildet und aus demselben Material gefertigt. Ist das Halteelement aus einem Kunststoff gefertigt, so ist dieser Kunststoff bevorzugt glasfaserverstärkt oder kohlenstofffaserverstärkt. Für rahmenlose Seitenfenster sind Halteelemente aus Metallen oder Metalllegierungen bevorzugt aufgrund ihrer größeren Stabilität. Für rahmenhaltige Seitenfenster sind Halteelemente aus Kunststoff bevorzugt aufgrund ihres geringeren Gewichts - die geringere Stabilität des Kunststoff-Halteelements im Vergleich zu metallenen Halteelementen wird hier durch die stabilisierende Wirkung des Rahmens im geschlossenen Zustand des Fensters ausgeglichen.

Der Anlageabschnitt und der Befestigungsabschnitt sind plattenartig ausgebildet, typischerweise im Wesentlichen rechteckig, wobei allerdings auch andere Formen denkbar sind. Die Materialstärke (Dicke) des Befestigungsabschnitts und des Anlageabschnitts und gegebenenfalls des Stufenabschnitts beträgt bevorzugt von 1 mm bis 10 mm, besonders bevorzugt von 2 mm bis 5 mm, beispielsweise 3,5 mm. Damit wird eine gute Stabilität erreicht, ohne dass damit ein zu großer Platzbedarf und ein zu hoher Materialeinsatz einhergeht. Bevorzugt weisen die Anlageabschnitte, die Befestigungsabschnitte und gegebenenfalls die Stufenabschnitte dieselbe Materialstärke auf.

Die Breite des Anlageabschnitts, des Befestigungsabschnitts und gegebenenfalls des Stufenabschnitts beträgt bevorzugt von 1 cm bis 100 cm, besonders bevorzugt von 2 cm bis 15 cm, beispielsweise 10 cm. Damit wird eine gute Stabilität erreicht, insbesondere stellen die Anlageabschnitte ausreichend große Adhäsionsflächen zur Verbindung mit der Seitenscheibe bereit.

Die Länge (oder Höhe) des Anlagelageabschnitts beträgt bevorzugt von 1 cm bis 6 cm, besonders bevorzugt von 2 cm bis 4 cm, beispielsweise 3 cm. Damit wird eine gute Stabilität erreicht, insbesondere stellen die Anlageabschnitte ausreichend große Adhäsionsflächen zur Verbindung mit der Seitenscheibe bereit. Die Fläche des Anlageabschnitts beträgt bevorzugt von 5 cm² bis 500 cm², besonders bevorzugt von 10 cm² bis 50 cm², beispielsweise 30 cm².

Die Länge (oder Höhe) des Befestigungsabschnitts beträgt bevorzugt von 2 cm bis 15 cm, besonders bevorzugt von 4 cm bis 10 cm, beispielsweise 8 cm. In diesem Bereich ist der Befestigungsabschnitt besonders vorteilhaft geeignet zur Verbindung mit üblichen Mechanismen zum Heben und Senken der Seitenscheibe. Die Länge des Stufenabschnitts beträgt beispielsweise von 2 mm bis 10 mm.

Im Sinne der Erfindung wird mit Breite die Dimension entlang der Unterkante der Seitenscheibe in Einbaulage bezeichnet. Mit Länge (oder Höhe) wird die dazu senkrechte Dimension verstanden, die in Einbaulage im Wesentlichen parallel zur Ebene der Seitenscheibe angeordnet ist. So ergibt sich die Kontaktfläche eines Anlageabschnitts zur Seitenscheibe beispielsweise als Produkt aus Länge und Breite des Anlageabschnitts. Die Materialstärke ist die Dimension senkrecht zur Ebene der Seitenscheibe in Einbaulage.

Der Befestigungsabschnitt und der Anlageabschnitte können plan ausgebildet sein. Die Krümmung der Seitenscheibe wird dann durch die Schicht an Klebstoff kompensiert. Alternativ können der Anlageabschnitt und oder der Befestigungsabschnitt aber auch gekrümmt sein und so beispielsweise an die Krümmung der Seitenscheibe angepasst sein und diese nachbilden und im Falle des Befestigungsabschnitts fortsetzen.

Die Erfindung umfasst außerdem eine Seitenscheibe mit Halteelement. Die Seitenscheibe ist als Fahrzeug-Seitenscheibe dafür vorgesehen, einen Fahrzeuginnenraum von einer äußeren Umgebung abzutrennen. Die Seitenscheibe weist eine Oberkante, eine Unterkante, eine Vorderkante und eine Hinterkante auf. Die Seitenscheibe weist außerdem eine erste Oberfläche (Hauptfläche) und eine der ersten Oberfläche gegenüberliegende zweite Oberfläche (Hauptfläche) auf, zwischen denen sich die besagten Kanten erstrecken. Im Bereich der Unterkante ist mindestens ein erfindungsgemäßes Halteelement an der Seitenscheibe angebracht. Damit ist gemeint, dass ein an die Unterkante angrenzender Bereich vom Halteelement bedeckt ist und sich das Halteelemente von dort aus über die Unterkante hinaus erstreckt. Der Anlageabschnitt des Halteelements ist adhäsiv an der ersten Oberfläche der Seitenscheibe befestigt, wobei die adhäsive Verbindung mittels eines Klebstoffs hergestellt wird. Typischerweise ist die Unterkante der Seitenscheibe mit zwei Halteelementen versehen.

Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die erfindungsgemäße Seitenscheibe ist bevorzugt eine zu öffnende, insbesondere heb- und senkbare Seitenscheibe eines Kraftfahrzeugs, insbesondere eines Personenkraftwagens. Darunter wird eine Scheibe für ein Seitenfenster verstanden, welches sich durch im Wesentlichen vertikale Verschiebung der Seitenscheibe in die Karosserie hinein öffnen und wieder schließen lässt. Typischerweise weisen solche Seitenscheiben mehrere, insbesondere zwei Halteelemente auf, die im Bereich der Unterkante angebracht sind, wo sie im geöffneten und auch im geschlossenen Zustand des Fensters in der Fahrzeugkarosserie verborgen sind. Jedes Halteelement weist eine Durchführung auf, die zur Verbindung mit einem in der Fahrzeugkarosserie, typischerweise einer Fahrzeugtür, angeordneten Hebemechanismus vorgesehen sind, um die Scheibe zu befestigen, insbesondere durch Einführen eines Befestigungsabschnitts des Hebemechanismus, beispielsweise eines Befestigungsstifts, in die Durchführung. Das Seitenfester kann rahmenlos oder rahmenhaltig sein. Ein rahmenhaltiges Seitenfester weist einen kompletten Karosserierahmen um die Fensteröffnung auf, so dass im geschlossenen Zustand alle Seitenkanten der Seitenscheibe innerhalb der von der Fahrzeugkarosserie überlappt werden - die Seitenscheibe wird beim Heben gleichsam in den Karosserierahmen eingeführt. Bei einem rahmenlosen Seitenfenster fehlt ein solcher Karosserierahmen. Stattdessen stehen die Oberkante, die Vorderkante und die Hinterkante der Seitenscheibe auf im geschlossenen Zustand frei.

Der mindestens eine Anlageabschnitt ist über eine Klebstoffschicht an der ersten Oberfläche der Seitenscheibe befestigt. Ist das Halteelement ein beidseitig anzubringendes Halteelement mit zwei Anlageabschnitten, so ist der erste Anlageabschnitt über eine erste Klebstoffschicht an der ersten Oberfläche der Seitenscheibe befestigt, der zweite Anlageabschnitt über eine zweite Klebstoffschicht an der zweiten Oberfläche der Seitenscheibe. Die Dicke einer einzelnen Klebstoffschicht beträgt bevorzugt von 0,5 mm bis 5 mm, besonders bevorzugt von 1 mm bis 4 mm. Herkömmliche Halteelemente sind typischerweise über Klebstoffschichten von jeweils etwa 1 mm Dicke mit der Seitenscheibe befestigt. In einer vorteilhaften Ausgestaltung werden dickere Klebstoffschichten verwendet, bevorzugt mit einer Dicke von 2 mm bis 4 mm. Das hat den Vorteil, dass die innerhalb einer Produktionsserie auftretende Streuung hinsichtlich der Randkrümmung der Seitenscheiben durch die dickere Klebstoffschicht besser kompensiert werden können. Durch den sich von der Scheibenunterkante hebelartig erstreckenden Befestigungsabschnitt ist bei herkömmlich angebrachten Halteelemente auch die Position der Anbindung an den Mechanismus zum Heben und Senken einer Streuung unterworfen und kann teils erheblich von der vorgesehenen Position abweichen. Durch die dickere Klebstoffschicht dagegen kann die genaue Ausrichtung des Halteelements freier gewählt werden, so dass der Befestigungsabschnitt exakter in der gewünschten Position angeordnet werden kann unabhängig von der Randkrümmung der Seitenscheibe. Hinsichtlich der Positionierung der Durchführung zur Befestigung am Hebemechanismus können Streuungen innerhalb einer Produktionsserie so verringert werden. Bei einem beidseitig anzubringenden Haltelement ergibt sich die Dicke der Klebeschichten aus dem Abstand der Anlageabschnitte voneinander (typischerweise bestimmt durch die Ausgestaltung der Stufenabschnitte) und der Dicke der Seitenscheibe, was bei der Konzeptionierung des Halteelements für einen bestimmten Typ von Seitenscheibe entsprechend zu berücksichtigen ist.

In einer bevorzugten Ausgestaltung ist der Klebstoff ein hochmoduliger Klebstoff. Das E-Modul (Elastizitätsmodul) des Klebstoffs beträgt bevorzugt mindestens 20 MPa, besonders bevorzugt mindestens 150 MPa, insbesondere mindestens 300 MPa, ganz besonders bevorzugt von 400 MPa bis 600 MPa. Damit wird eine besondere Stabilität der Verbindung von Seitenscheibe mit Halteelement erreicht. Dieser Vorteil kommt im Besonderen bei rahmenlosen Seitenfenstern zu tragen, bei denen die Verbindung zwischen Seitenscheibe und Halteelement in besonderem Maße belastet wird, beispielsweise durch in Richtung der Hinterkante wirkende, durch den Fahrtwind hervorgerufene Kräfte. Geeignete hochmodulige Klebstoffe sind beispielsweise Polyurethan-, Acrylat- oder Epoxidklebstoffe.

In einer vorteilhaften Ausgestaltung ist der Klebstoff ein schnellhärtender Klebstoff, so dass ein direktes Entformen ohne weitere Stabilisierungsmaßnahmen ermöglicht wird. Die schnelle Aushärtung kann durch Vermischen zweier Komponenten erreicht werden. Andere Wege sind eine Aushärtung durch Energieeintrag von außen, beispielsweise mittels Wärme oder Licht. Die sogenannte offene Zeit des zweikomponentigen Klebstoffes liegt zwischen 0,5 min und 10 min, bevorzugt zwischen 1 min und 5 min. Die Aushärtezeit oder Abbindezeit des Klebstoffes zur Erreichung einer ausreichenden inneren Festigkeit ist kleiner 10 min, bevorzugt von 1 min bis 5 min. Das hat den Vorteil, dass die Position des Halteelements zur Seitenscheibe schnell fixiert ist, so dass auf stabilisierende Maßnahmen nach dem Anbringen des Halteelements verzichtet werden kann. Der Klebstoff kann aber auch ein langsamhärtender Klebstoff sein.

Die Seitenscheibe ist, wie für Fahrzeugscheibe üblich, bevorzugt so gebogen, dass die innenraumseitige Oberfläche konkav und die außenseitige Oberfläche konvex ausgebildet ist. Als außenseitige Oberfläche wird diejenige Oberfläche bezeichnet, welche in Einbaulage der äußeren Umgebung zugewandt ist. Als innenraumseitige Oberfläche wird diejenige Oberfläche bezeichnet, welche in Einbaulage dem Innenraum zugewandt ist. Die erste Oberfläche im Sinne der Erfindung kann die innenraumseitige oder die außenseitige Oberfläche sein, bevorzugt die innenraumseitige.

In einer Ausgestaltung ist die Seitenscheibe als Einscheibensicherheitsglas (ESG) ausgebildet. Die Seitenscheibe besteht dabei aus einer einzelnen Glasscheibe, die thermisch oder chemisch gehärtet (vorgespannt) ist. Die Dicke der Glasscheibe beträgt bevorzugt von 2 mm bis 5 mm.

In einer anderen Ausgestaltung ist die Seitenscheibe als Verbundscheibe (VSG: Verbundsicherheitsglas) ausgebildet. Die Verbundscheibe umfasst eine erste Glasscheibe und eine zweite Glasscheibe, die durch eine thermoplastische Zwischenschicht miteinander verbunden sind. Die Scheiben können auch als Außenscheibe und Innenscheibe bezeichnet werden, wobei die Innenscheibe in Einbaulage dem Innenraum zugewandt ist und die Außenscheibe in Einbaulage der äußeren Umgebung zugewandt ist. Die exponierten Oberflächen der Seitenscheibe, an denen das Halteelement angeklebt wird, sind die von der Zwischenschicht abgewandten Oberflächen der Einzelscheiben, also die außenseitige Oberfläche der Außenscheibe und die innenraumseitige Oberfläche der Innenscheibe. Die Außenscheibe und die Innenscheibe weisen bevorzugt eine Dicke von 1 mm bis 5 mm, wobei die Dicke der beiden Scheiben gleich sein kann (symmetrische Scheiben) oder auch unterschiedlich (asymmetrische Scheiben). Die Dicke der Zwischenschicht beträgt bevorzugt von 0,3 mm bis 2 mm, besonders bevorzugt von 0,5 mm bis 1 mm. Die Zwischenschicht wird typischerweise aus einer Polymerfolie ausgebildet, bevorzugt aus oder auf Basis von Polyvinylbutyral (PVB), Ethylenvinylacetat (EVA) oder Polyurethan (PU). Zur Verbesserung des thermischen Komforts im Fahrzeug kann die Zwischenschicht aus einer geräuschmindernden Polymerfolie ausgebildet sein, welche typischerweise mindestens drei Lagen umfassen, wobei die mittlere Lage eine höhere Plastizität oder Elastizität aufweist als die sie umgebenden äußeren Lagen, beispielsweise infolge eines unterschiedlichen Anteils an Weichmachern.

Die Glasscheibe oder Glasscheiben ist/sind bevorzugt aus Kalk-Natronglas gefertigt, wie es für Fensterscheiben üblich ist. Die Glasscheiben können klar und farblos, aber auch getönt, getrübt oder gefärbt sein.

Die Erfindung umfasst auch ein Fahrzeug mit einem innerhalb der Karossiere angeordneten Hebemechanismus für ein zu öffnendes Seitenfenster und einer erfindungsgemäßen Seitenscheibe, wobei der Hebemechanismus am Befestigungsabschnitt des Halteelements oder der Halteelemente angebracht ist, bevorzugt über eine Halterung in der Durchführung durch den Befestigungsabschnitt.

Die Erfindung umfasst außerdem ein Verfahren zur Herstellung einer Seitenscheibe mit Halteelement für ein Fahrzeug. Dabei werden mindestens ein erfindungsgemäßes Halteelement sowie eine Seitenscheibe mit einer ersten Oberfläche, einer dieser gegenüberliegenden zweiten Oberfläche und einer Unterkante bereitgestellt. Das Halteelement wird in der gewünschten Position zur Seitenscheibe angeordnet, wobei die Anlagefläche des mindestens einen Anlageabschnitts auf die erste Oberfläche der Seitenscheibe gerichtet ist. Die gewünschte Position bezeichnet hierbei die bestimmungsgemäße Anordnung des Halteelements relativ zur Seitenscheibe, die das fertig montierte Halteelement einnehmen soll. Dann wird ein Klebstoff durch die dafür vorgesehene Befüllöffnung in den Zwischenraum zwischen der Anlagefläche und der ersten Oberfläche der Seitenscheibe eingespritzt. Die Kanäle der Anlagefläche bewirken eine homogene Verteilung des Klebstoffs. Die Klebeflächen können so hinreichend benetzt werden, ohne dass eine kritische Menge an Klebstoff aus dem Zwischenraum zwischen der Anlagefläche und der Scheibenoberfläche austritt. Das Verfahren kann daher vorteilhafterweise ohne eine Abdichtung des Zwischenraums durchgeführt werden.

In einer bevorzugten Ausführung des Verfahrens wird die Seitenscheibe in einem Werkzeug in einer festgelegten Position, die beispielsweise anhand von Referenzpunkten der Scheibe definiert ist, angeordnet und fixiert. Das Halteelement wird in die gewünschte Position gebracht, beispielsweise mit einer Montagehilfe oder einem Roboter. Die Position des Halteelements wird so gewählt, dass die Befestigungsabschnitte des fertig montierten Halteelements in der gewünschten Position relativ zur Scheibe angeordnet sind.

In einer vorteilhaften Ausführung des Verfahrens ist der Klebstoff ein schnellhärtender Klebstoff. Dadurch wird die Position des Halteelements relativ zur Seitenscheibe ausreichend schnell fixiert, so dass auf Maßnahmen der vorübergehenden Positionsstabilisierung während des Aushärtens des Klebstoffs verzichtet werden kann. Der Produktionsprozess wird somit vereinfacht und beschleunigt. Es kann aber auch ein langsamhärtender Klebstoff verwendet werden. Dann sind eventuell Maßnahmen der vorübergehenden Positionsstabilisierung zu treffen, etwa durch Klemmen, Halten oder mittels eines zweiten Klebstoffs, beispielsweise eines Heißklebstoffs.

Das Halteelement selbst wird durch fachübliche Verfahren hergestellt. Halteelemente aus Kunststoff werden bevorzugt im Spritzgussverfahren gefertigt, Halteelemente aus Metall oder Metalllegierungen beispielsweise durch Strangguss, Druckguss, Fräsen, Stanzen, Walzen und/oder Schweißen. Die Kanäle können beispielsweise durch die Spritzgussform direkt ausgebildet werden oder durch nachträgliche Bearbeitung eingebracht werden.

Die Erfindung umfasst außerdem die Verwendung einer erfindungsgemäßen Seitenscheibe als zu öffnende Seitenscheibe eines Kraftfahrzeugs, bevorzugt eines Personenkraftwagens, wobei das Halteelement zur Befestigung an einem Hebemechanismus in der Fahrzeugkarosserie dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Seitenscheibe mit zwei gattungsgemäßen Halteelementen,
- Fig. 2: einen Querschnitt durch zwei Seitenscheiben mit unterschiedlichen Ausgestaltungen des Halteelement 1,
- Fig. 3: eine Draufsicht auf die zur Seitenscheibe 1 hingewandte Oberfläche einer Ausgestaltung des Halteelements 1,
- Fig. 4: einen Schnitt A-A' durch das Halteelement 1 aus Figur 3,
- Fig. 5: einen Querschnitt durch eine weitere Ausgestaltung der Seitenscheibe mit Halteelements 1 und
- Fig. 6: ein Flussdiagramm einer Ausführungsform des erfindungsgemäßen Verfahrens.

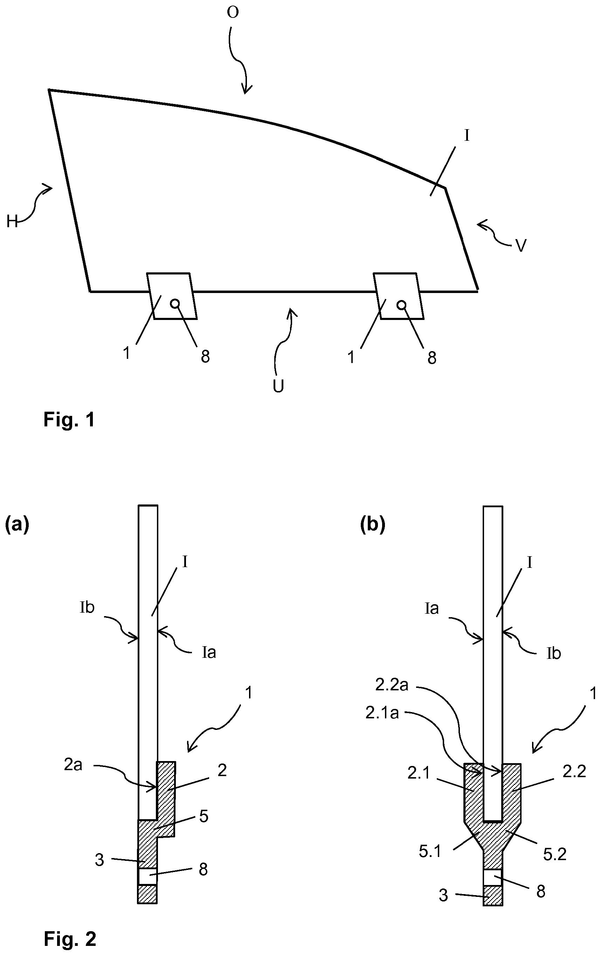

Fig. 1 zeigt eine Draufsicht auf eine gattungsgemäße Seitenscheibe I, die als zu öffnende Seitenscheibe für das vordere Seitenfenster eines Personenkraftwagens vorgesehen ist. Im Bereich der Unterkante U der Seitenscheibe sind zwei Halteelemente 1 angebracht, die zur Verbindung mit einem Hebemechanismus innerhalb der Fahrzeugtür vorgesehen sind. Die Halteelemente 1 weisen hierzu Durchführungen 8 auf, an denen der Hebemechanismus befestigt werden kann.

Fig. 2 zeigt einen Querschnitt durch zwei verschiedene Ausgestaltungen einer Seitenscheibe I mit dem Halteelement 1. In Fig. 2a ist ein einseitig angebrachtes Halteelement 1 dargestellt. Das Halteelement 1 ist aufgebaut aus einem einzigen Anlageabschnitt 2, der an der ersten Oberfläche Ia der Seitenscheibe I befestigt ist. Dazu ist die der Seitenscheibe I zugewandte Anlagefläche 2a des Anlageabschnitts 2 an die Oberfläche Ia angeklebt. Über einen Stufenabschnitt 5 ist an den Anlageabschnitt 2 ein Befestigungsabschnitt 3 mit der Durchführung 8 angeschlossen. Das Halteelement 1 bedeckt einen Bereich der Unterkante U und einen daran angrenzenden Bereich der Oberfläche Ia. Der Befestigungsabschnitt 3 ragt über die Unterkante U der Seitenscheibe I über, ist lateral gegenüber dem Anlageabschnitt 2 versetzt, so dass er etwa in der Ebene der Seitenscheibe I angeordnet ist und auf deren Unterkante U gerichtet ist. In Fig. 2b ist ein beidseitig angebrachtes Halteelement 1 dargestellt mit einem im Wesentlichen Y-förmigen Querschnitt. Das Halteelement 1 umfasst zwei einander gegenüberliegende Anlageabschnitte 2.1, 2.2, welche im Bereich der Unterkante U der Seitenscheibe I an den beiden Oberflächen Ia, Ib befestigt sind. Dazu ist die der Seitenscheibe I zugewandte Anlagefläche 2.1a des Anlageabschnitts 2.1 an die Oberfläche Ia angeklebt und die der Seitenscheibe I zugewandte Anlagefläche 2.2a des Anlageabschnitts 2.2 an die Oberfläche Ib angeklebt. Das Halteelement 1 umgibt also einen Bereich der Unterkante U und daran angrenzende Bereich der Oberflächen Ia, Ib. An die Anlageabschnitte 2.1, 2.2 schließt sich über jeweils einen zugeordneten Stufenabschnitt 5.1, 5.2 ein Befestigungsabschnitt 3 an, der unterhalb der Seitenscheibe I positioniert ist und auf die Unterkante U gerichtet ist. Der Befestigungsabschnitt 3 weist auch hier eine Durchführung 8 zur Verbindung mit dem Hebemechanismus auf.

Die Halteelemente 1 sind einstückig aus glasfaserverstärktem Polyamid 66 gefertigt. Die Anlageabschnitt 2, 2.1, 2.2, die Befestigungsabschnitte 3 und die Stufenabschnitte 5, 5.1, 5.2 weisen eine Dicke D (Materialstärke) von 3 mm auf. Die Breite B der Halteelemente 1 beträgt beispielsweise 80 mm. Die Länge L der Anlageabschnitte 2, 2.1, 2.2 beträgt beispielsweise 30 mm. Die Länge L der Befestigungsabschnitte 3 beträgt beispielsweise 50 mm.

Die Klebstoffschichten zwischen den Anlageflächen 2a, 2.1a, 2.2a und der Seitenscheibe I sind der Einfachheit halber nicht dargestellt. Der Klebstoff ist beispielsweise DOW Betaforce 9050S mit einem E-Modul von 400 MPa, einer Bruchdehnung von 80 %, einer Reißfestigkeit von 15 MPa und einer Topfzeit von 6 min. Die Dicke der Klebstoffschichten beträgt beispielsweise 3 mm.

Die Seitenscheibe I ist beispielsweise als Einscheibensicherheitsglas (ESG) ausgeführt aus 3,85 mm dickem Kalk-Natronglas. Die Seitenscheibe I ist der Einfachheit halber in der Figur plan dargestellt, weist in der Realität aber eine Krümmung auf, wie es für Scheiben von Personenkraftwagen üblich ist.

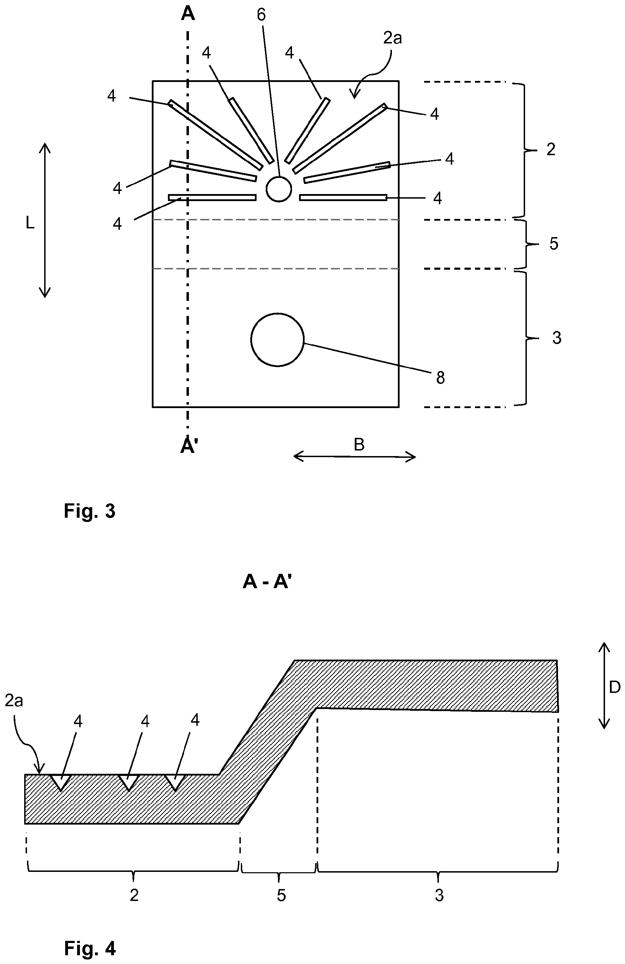

Fig. 3 zeigt eine Draufsicht auf die der Seitenscheibe I zugewandte Seite eines einseitig anzubringenden Halteelements 1 gemäß Figur 2a mit dem Befestigungsabschnitt 3 samt Durchführung 8, dem Stufenabschnitt 5 und dem Anlageabschnitt 2. In der Draufsicht ist die Anlagefläche 2a des Anlageabschnitts 2 zu erkennen, welche mit der Seitenscheibe I verbunden wird. Die Anlagefläche weist nahe der dem Stufenabschnitt 5 zugewandten Kante eine Befüllöffnung 6 auf, durch die bei der Montage des Halteelements 1 ein Klebstoff in den Zwischenraum zwischen Seitenscheibe I und Anlageabschnitt 2 eingespritzt wird. In die Anlagefläche 2a ist eine Mehrzahl von Kanälen 4 eingebracht. Die Kanäle 4 sind dafür vorgesehen, den durch die Befüllöffnung 6 eingespritzten Klebstoff möglichst homogen über die Anlagefläche 2a zu verteilen. Dadurch kann eine gute Benetzung der Anlagefläche 2a sowie dem ihr gegenüberliegenden Bereich der Oberfläche Ia erreicht werden, ohne dass überschüssiger Klebstoff aus dem Zwischenraum auszutreten droht, was bei herkömmlichen Halteelementen 1 durch eine Dichtvorrichtung verhindert oder durch Nachbearbeitung behoben werden müsste. Die Kanäle 4 sind gerade ausgebildet und einerseits auf die Befüllöffnung 6 und andererseits auf die Seitenkante der Anlagefläche 2a gerichtet. Die Kanäle 4 sind fächerartig um die Befüllöffnung verteilt und verlaufen radial zwischen Befüllöffnung 6 und Seitenkante der Anlagefläche 2a, um den Klebstoff zu verteilen.

Die Anlageflächen 2.1a, 2.2a des Halteelements 1 gemäß Figur 2b sind ebenfalls mit den erfindungsgemäßen Kanälen 4 um Befüllöffnungen 6 ausgebildet.

In der Figur sind durch Pfeile die Dimensionen der Breite B und der Länge L im Sinne der Erfindung angedeutet.

Fig. 4 zeigt einen Schnitt entlang A-A' durch das Halteelement 1 aus Figur 3. Außerdem ist durch einen Pfeil die Dimension der Dicke D (Materialstärke) im Sinne der Erfindung angedeutet. Zu erkennen sind die Kanäle 4, die in die Anlagefläche 2a eingebracht sind. Sie weisen beispielsweise eine Breite von 1,5 mm auf und eine Tiefe von 1 mm.

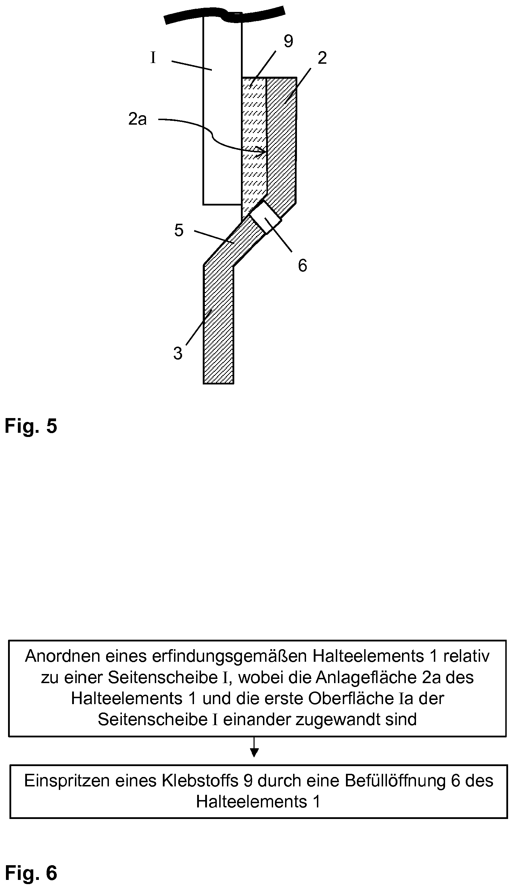

Fig. 5 zeigt einen Querschnitt durch eine erfindungsgemäße Seitenscheibe I mit einer weiteren Ausgestaltung des Halteelements 1. Das Halteelement ist einseitig anzubringen mit einem einzigen Anlageabschnitt 2 und einem über einen Stufenabschnitt 5 mit diesem verbundenen Befestigungsabschnitt 3. Die Befüllöffnung 6 zum Einspritzen des Klebstoff 9 ist hier im Stufenabschnitt 5 angeordnet. In diesem Fall kann es für die Verteilung des Klebstoffs 9 vorteilhaft sein, wenn sich die Kanäle 4 über den Anlageabschnitt 2 hinaus in den Stufenabschnitt 5 fortsetzen.

Fig. 6 zeigt ein Flussdiagramm eines Ausführungsbeispiels des erfindungsgemäßen Verfahrens zur Herstellung einer erfindungsgemäßen Seitenscheibe mit Halteelement. Da die gleichmäßige Verteilung des Klebstoffs 9 durch die Kanäle 4 sichergestellt wird, kann beim Einspritzen des Klebstoffs 9 auf die Abdichtung des Zwischenraums zwischen Halteelement 1 und Seitenscheibe I verzichtet werden.

### Bezugszeichenliste:

- (1): Halteelement für eine Seitenscheibe eines Fahrzeugs
- (2): Anlageabschnitt des Halteelements 1
- (2.1): erster Anlageabschnitt des Halteelements 1
- (2.2): zweiter Anlageabschnitt des Halteelements 1
- (2a): Anlagefläche des Anlageabschnitts 2
- (2.1a): Anlagefläche des Anlageabschnitts 2.1
- (2.2a): Anlagefläche des Anlageabschnitts 2.2
- (3): Befestigungsabschnitt des Halteelements 1
- (4): Kanal
- (5): Stufenabschnitt des Halteelements 1
- (5.1): erster Stufenabschnitt des Halteelements 1
- (5.2): zweiter Stufenabschnitt des Halteelements 1
- (6): Befüllöffnung
- (8): Durchführung durch den Befestigungsabschnitt 3
- (9): Klebstoff

- I: Seitenscheibe eines Fahrzeugs
- Ia: erste Oberfläche der Seitenscheibe I
- Ib: zweite Oberfläche der Seitenscheibe I

- (O): Oberkante der Seitenscheibe I
- (U): Unterkante der Seitenscheibe I
- (V): Vorderkante der Seitenscheibe I
- (H): Hinterkante der Seitenscheibe I

- (L): Länge / Höhe
- (B): Breite
- (D): Dicke / Materialstärke

- A-A': Schnittlinie

## Patentansprüche

1. Halteelement (1) für eine Seitenscheibe (I) eines Fahrzeugs, umfassend
- mindestens einen Anlageabschnitt (2) zur Befestigung an einer ersten Oberfläche (Ia) der Seitenscheibe (I), wobei der Anlageabschnitt (2) eine Anlagefläche (2a) aufweist, die dafür vorgesehen ist, über einen Klebstoff (9) mit der ersten Oberfläche (Ia) verbunden zu werden,
- einen mit dem Anlageabschnitt (2) verbundenen Befestigungsabschnitt (3) zur Befestigung am Fahrzeug und
- eine Befüllöffnung (6) zum Einspritzen des Klebstoffs (9) in den Zwischenraum zwischen dem Anlageabschnitt (2) und der ersten Oberfläche (Ia)der Seitenscheibe (I),
**dadurch gekennzeichnet, dass** die Anlagefläche (2a) eine Mehrzahl von Kanälen (4) aufweist, welche auf die Befüllöffnung (6) gerichtet sind und fächerartig über die Anlagefläche (2a) verteilt sind.

2. Halteelement (1) nach Anspruch 1, wobei die Kanäle (4) geeignet sind, die Fließrichtung des Klebstoffs (9) zu beeinflussen.

3. Halteelement (1) nach Anspruch 2, wobei die Kanäle (4) derart angeordnet sind, dass sich der Klebstoff (9) gleichmäßiger über die Anlagefläche (2a) verteilt als ohne die Kanäle (4).

4. Halteelement (1) nach einem der Ansprüche 1 bis 3, wobei mindestens einer Ecke der Anlagefläche (2a) ein Kanal (4) zugeordnet ist, der auf sie gerichtet ist.

5. Halteelement (1) nach einem der Ansprüche 1 bis 4, wobei die Kanäle (4) eine Tiefe von 0,5 mm bis 1,5 mm aufweisen und eine Breite von 1 mm bis 2 mm.

6. Halteelement (1) nach einem der Ansprüche 1 bis 5, welches genau einen Anlageabschnitt (2) aufweist, der über einen Stufenabschnitt (5) mit dem Befestigungsabschnitt (3) verbunden ist.

7. Halteelement (1) nach einem der Ansprüche 1 bis 5, welches einen ersten Anlageabschnitt (2.1) zur Befestigung an der ersten Oberfläche (Ia) der Seitenscheibe (I) und einen zweiten Anlageabschnitt (2.2) zur Befestigung an einer gegenüberliegenden zweiten Oberfläche (Ib) der Seitenscheibe (I) aufweist, wobei der erste Anlageabschnitt (2.1) über einen ersten Stufenabschnitt (5.1) und der zweite Anlageabschnitt (2.2) über einen zweiten Stufenabschnitt (5.2) mit dem Befestigungsabschnitt (3) verbunden sind.

8. Seitenscheibe für ein Fahrzeug, mit einer ersten Oberfläche (Ia), einer dieser gegenüberliegenden zweiten Oberfläche (Ib) und einer Unterkante (U), und mit mindestens einem im Bereich der Unterkante (U) angebrachten Halteelement (1) nach einem der Ansprüche 1 bis 7,
wobei mittels eines Klebstoffs (9) der mindestens eine Anlageabschnitt (2) an der ersten Oberfläche (Ia) befestigt ist.

9. Seitenscheibe nach Anspruch 8, wobei die Dicke des Klebstoffs (9) von 0,5 mm bis 5 mm beträgt, bevorzugt von 1 mm bis 4 mm, besonders bevorzugt von 2 mm bis 4 mm.

10. Seitenscheibe nach Anspruch 8 oder 9, wobei der Klebstoff (9) ein E-Modul von mindestens 20 MPa aufweist, bevorzugt mindestens 150 MPa, ganz besonders bevorzugt von 400 MPa bis 600 MPa.

11. Verfahren zur Herstellung einer Seitenscheibe mit Halteelement für ein Fahrzeug, wobei:
(a) ein Halteelement (1) nach einem der Ansprüche 1 bis 7 und eine Seitenscheibe (I) mit einer ersten Oberfläche (Ia), einer dieser gegenüberliegenden zweiten Oberfläche (Ib) und einer Unterkante (U) bereitgestellt werden,
(b) das Halteelement (1) in der gewünschten Position zur Seitenscheibe (I) angeordnet wird, wobei die Anlagefläche (2a) auf die erste Oberfläche (Ia) gerichtet ist, und
(c) ein Klebstoff (9) durch die Befüllöffnung (6) in den Zwischenraum zwischen der Anlagefläche (2a) und der ersten Oberfläche (Ia) eingespritzt wird.

12. Verfahren nach Anspruch 11, welches ohne Abdichtung des Zwischenraums zwischen der Anlagefläche (2a) und der ersten Oberfläche (Ia) durchgeführt wird.

13. Verfahren nach Anspruch 11 oder 12, wobei mindestens 95 % der Anlagefläche (2a) mit Klebstoff (9) benetzt wird, bevor der Klebstoff (9) über die Anlagefläche (2a) übertritt.

14. Verwendung einer Seitenscheibe nach einem der Ansprüche 8 bis 10 als zu öffnende Seitenscheibe eines Kraftfahrzeugs, bevorzugt eines Personenkraftwagens.

## Claims

1. Retaining element (1) for a side window (I) of a vehicle, comprising
- at least one contact section (2) for securing to a first surface (Ia) of the side window (I), wherein the contact section (2) has a contact surface (2a) that is provided for being connected to the first surface (Ia) via an adhesive (9),
- a securing section (3) connected to the contact section (2) and for securing to the vehicle, and
- a filling opening (6) for injecting the adhesive (9) into the intermediate space between the contact section (2) and the first surface (Ia) of the side window (I),
**characterized in, that** the contact surface (2a) has a plurality of channels (4) that are directed toward the filling opening (6) and are distributed over the contact surface (2a) in a fan-like manner.

2. Retaining element (1) according to claim 1, wherein the channels (4) are suitable for influencing the flow direction of the adhesive (9).

3. Retaining element (1) according to claim 2, wherein the channels (4) are arranged such that the adhesive (9) is distributed more evenly over the contact surface (2a) than without the channels (4).

4. Retaining element (1) according to one of claims 1 through 3, wherein a channel (4) is associated with at least one corner of the contact surface (2a), toward which it is directed.

5. Retaining element (1) according to one of claims 1 through 4, wherein the channels (4) have a depth of 0.5 mm to 1.5 mm and a width of 1 mm to 2 mm.

6. Retaining element (1) according to one of claims 1 through 5, which has exactly one contact section (2), which is connected to the securing section (3) via a step section (5).

7. Retaining element (1) according to one of claims 1 through 5, which has a first contact section (2.1) for securing to the first surface (Ia) of the side window (I) and a second contact section (2.2) for securing to an opposite second surface (lb) of the side window (I), wherein the first contact section (2.1) is connected to the securing section (3) via a first step section (5.1) and the second contact section (2.2) is connected to the securing section (3) via a second step section (5.2).

8. Side window for a vehicle, having a first surface (la), a second surface (lb) opposite thereto, and a lower edge (U), and having at least one retaining element (1) according to one of claims 1 through 7 attached in the region of the lower edge (U),
wherein the at least one contact section (2) is secured to the first surface (Ia) by means of an adhesive (9).

9. Side window according to claim 8, wherein the thickness of the adhesive (9) is from 0.5 mm to 5 mm, preferably from 1 mm to 4 mm, particularly preferably from 2 mm to 4 mm.

10. Side window according to claim 8 or 9, wherein the adhesive (9) has a modulus of elasticity of at least 20 MPa, preferably at least 150 MPa, most particularly preferably of 400 MPa to 600 Mpa.

11. Method for producing a side window having a retaining element for a vehicle, wherein:
(a) a retaining element (1) according to one of claims 1 through 7 and a side window (I) having a first surface (la), a second surface (lb) opposite thereto, and a lower edge (U) are provided,
(b) the retaining element (1) is arranged in the desired position relative to the side window (I), wherein the contact surface (2a) is directed toward the first surface (la), and
(c) an adhesive (9) is injected through the filling opening (6) into the intermediate space between the contact surface (2a) and the first surface (Ia).

12. Method according to claim 11, which is carried out without sealing the intermediate space between the contact surface (2a) and the first surface (Ia).

13. Method according to claim 11 or 12, wherein at least 95 % of the contact surface (2a) is wetted with adhesive (9) before the adhesive (9) flows beyond the contact surface (2a).

14. Use of a side window according to one of claims 8 through 10 as an openable side window of a motor vehicle, preferably of a passenger car.

## Revendications

1. Elément de retenue (1) pour une vitre latérale (I) d'un véhicule, comprenant
- au moins une partie de contact (2) destinée à être fixée sur une première surface (Ia) de la vitre latérale (I), la partie de contact (2) présentant une surface de contact (2a) qui est prévue pour être reliée à la première surface (Ia) par l'intermédiaire d'un adhésif (9),
- une section de fixation (3) reliée à la section de contact (2) et destinée à être fixée au véhicule, et
- une ouverture de remplissage (6) pour injecter l'adhésif (9) dans l'espace intermédiaire entre la section de contact (2) et la première surface (Ia) de la vitre latérale (I),
**caractérisé en ce que** la surface de contact (2a) présente une pluralité de canaux (4) qui sont dirigés vers l'ouverture de remplissage (6) et sont répartis sur la surface de contact (2a) à la manière d'un éventail.

2. Elément de retenue (1) selon la revendication 1, dans lequel les canaux (4) sont appropriés pour influencer la direction d'écoulement de l'adhésif (9).

3. Elément de retenue (1) selon la revendication 2, dans lequel les canaux (4) sont disposés de telle sorte que l'adhésif (9) est réparti plus régulièrement sur la surface de contact (2a) que sans les canaux (4).

4. Élément de retenue (1) selon l'une des revendications 1 à 3, dans lequel un canal (4) est associé à au moins un coin de la surface de contact (2a), vers lequel il est dirigé.

5. Élément de retenue (1) selon l'une des revendications 1 à 4, dans lequel les canaux (4) ont une profondeur de 0,5 mm à 1,5 mm et une largeur de 1 mm à 2 mm.

6. Élément de retenue (1) selon l'une des revendications 1 à 5, qui présente exactement une section de contact (2), qui est reliée à la section de fixation (3) par l'intermédiaire d'une section étagée (5).

7. Elément de retenue (1) selon l'une des revendications 1 à 5, qui présente une première section de contact (2.1) pour la fixation sur la première surface (Ia) de la vitre latérale (I) et une deuxième section de contact (2.2) pour la fixation sur une deuxième surface opposée (Ib) de la vitre latérale (I), la première section de contact (2.1) étant reliée à la section de fixation (3) par une première section étagée (5.1) et la deuxième section de contact (2.2) étant reliée à la section de fixation (3) par une deuxième section étagée (5.2).

8. Vitre latérale pour un véhicule, comportant une première surface (la), une deuxième surface (Ib) opposée à la première, et un bord inférieur (U), et comportant au moins un élément de retenue (1) selon l'une des revendications 1 à 7, fixé dans la zone du bord inférieur (U), dans lequel la au moins une section de contact (2) est fixée à la première surface (Ia) au moyen d'un adhésif (9).

9. Vitre latérale selon la revendication 8, dans laquelle l'épaisseur de l'adhésif (9) est comprise entre 0,5 mm et 5 mm, de préférence entre 1 mm et 4 mm, de manière particulièrement préférée entre 2 mm et 4 mm.

10. Vitre latérale selon la revendication 8 ou 9, dans laquelle l'adhésif (9) présente un module d'élasticité d'au moins 20 MPa, de préférence d'au moins 150 MPa, plus particulièrement de 400 MPa à 600 Mpa.

11. Procédé de fabrication d'une vitre latérale comportant un élément de retenue pour un véhicule, dans lequel :
(a) on prévoit un élément de retenue (1) selon l'une des revendications 1 à 7 et une vitre latérale (I) présentant une première surface (la), une deuxième surface (Ib) opposée à celle-ci, et un bord inférieur (U),
(b) l'élément de retenue (1) est disposé dans la position souhaitée par rapport àu vitre latérale (I), dans laquelle la surface de contact (2a) est dirigée vers la première surface (la), et
(c) un adhésif (9) est injecté à travers l'ouverture de remplissage (6) dans l'espace intermédiaire entre la surface de contact (2a) et la première surface (Ia).

12. Procédé selon la revendication 11, qui est mis en œuvre sans sceller l'espace intermédiaire entre la surface de contact (2a) et la première surface (Ia).

13. Procédé selon la revendication 11 ou 12, dans lequel au moins 95 % de la surface de contact (2a) est mouillée par l'adhésif (9) avant que l'adhésif (9) ne s'écoule au-delà de la surface de contact (2a).

14. Utilisation d'une vitre latérale selon l'une des revendications 8 à 10 comme vitre latérale ouvrable d'un véhicule automobile, de préférence d'une voiture particulière.
